# EUROPÄISCHE PATENTSCHRIFT

(11) **EP 3 821 950 B1**
(45) Veröffentlichungstag und Bekanntmachung des Hinweises auf die Patenterteilung: **05.07.2023**
(21) Anmeldenummer: 20203423.7
(22) Anmeldetag: 22.10.2020
(51) Int. Cl.: A62C 8/06, D03D 15/00, B32B 3/08, B32B 5/02, B32B 5/16, B32B 5/24, B32B 5/30, B32B 7/09

(54) **LÖSCHDECKE**
FIRE BLANKET
COUVERTURE ANTI-FEU

(30) Priorität: 13.11.2019 DE 102019130667
(43) Veröffentlichungstag der Anmeldung: 19.05.2021
(73) Patentinhaber: Planex Technik in Textil GmbH, 67071 Ludwigshafen (DE)
(72) Erfinder: Haertle, Jörg, 67117 Limburgerhof (DE)
(74) Vertreter: Müller, Jochen

(56) Entgegenhaltungen:
- CN-A- 108 609 279
- US-A1- 2015 136 431

## Beschreibung

Die Erfindung bezieht sich auf eine Löschdecke mit einem mehrlagigen Aufbau.

Mit einer Löschdecke, auch Feuerlöschdecke oder Brandschutzdecke genannt, können bereits entstandene offene Brände mit Gas-, Rauch- und Flammenbildung überdeckt oder abgedeckt werden. Im Folgenden sind die Begriffe Löschdecke und Brandschutzdecke synonym zu verstehen. Dabei verhindert die Löschdecke ein Übergreifen von Flammen auf umliegende Gegenstände. Zudem wird eine Sauerstoffzufuhr zum eigentlichen Brandherd erheblich reduziert, so dass ein Brand durch Sauerstoffmangel eingedämmt oder sogar erstickt werden kann. Derartige Löschdecken bestehen unter anderem aus Glas-, Nomex-, oder Aramidgeweben und sind in verschiedenen Größen erhältlich, beispielsweise für den Einsatz in Privathaushalten bis zum Abdecken eines kompletten Kraftfahrzeugs.

Weiterhin gibt es Löschdecken, die speziell für die Eindämmung von Bränden beziehungsweise Selbstentzündungen von Lithium-Ionen-Batterien ausgelegt sind. Bei einer Beschädigung einer Lithium-Ionen-Batterie kommt es aufgrund der chemischen Zusammensetzung der Komponenten zu einer Freisetzung insbesondere von gasförmiger Flusssäure, chemisch: HF, und zu einer Freisetzung erheblicher thermischer Energie. Zudem erfolgt das Abbrennen einer beschädigten Lithium-Ionen-Batterie, englisch: "thermal runaway", ohne externe Sauerstoffzufuhr, so dass die bloße Unterbindung der Sauerstoffzufuhr nichts bewirkt. Hierzu bietet beispielsweise die Firma ADL Insulflex, Cobourg, Ontario, Kanada Löschdecken speziell für Laptops, Smartphones, Elektrofahrzeuge und sonstige Geräte mit Lithium-Ionen-Batterien an, die aus Glasfasergewebe und mehreren aluminisierten Mylarfolien bestehen. Von der Firma LithiumSafe, Oosterhout, Niederlande sind Taschen aus einem mehrlagigen oder mehrschichtigen Material bekannt, in die beispielsweise ein Laptop eingelegt werden kann, dessen Lithium-Ionen-Batterien beginnen durchzubrennen.

Die US 2015/0136431 A1 offenbart eine Brandschutzdecke oder Löschdecke mit einem mehrlagigen Aufbau aus zwei äußeren Schichten aus Glasfasern und einer dazwischen angeordneten weiteren Glasfaserschicht.

Der Erfindung liegt die Aufgabe zugrunde, eine Löschdecke anzugeben, die einfach herstellbar und vielseitig verwendbar ist und die Umgebung vor den Folgen des Durchbrennens einer Lithium-Ionen-Batterie wirkungsvoll schützt.

Erfindungsgemäß werden diese Aufgaben durch die Merkmale des Anspruchs 1 gelöst.

Der Kerngedanke der Erfindung besteht darin, dass eine Löschdecke einen dreischichtigen oder dreilagigen Aufbau aufweist. Dabei werden die beiden äußeren Schichten oder Lagen jeweils von einem feuerfesten Glasgewebe gebildet, das insbesondere gemäß der Industrienorm EN 13501-1 feuerfest ist, beziehungsweise ein entsprechendes Brennverhalten aufweist. Das Glasgewebe kann auch als Glasfilament-Gewebe bezeichnet werden. Zwischen den beiden äußeren Gewebeschichten ist als mittlere Schicht Bentonit in Form eines Feingranulats angeordnet, beziehungsweise zwischen diesen Schichten eingebracht. Bentonit ist ein Gestein, das zu 60 bis 80 % aus Montmorillonit besteht sowie unter anderem Quarz, Glimmer, Feldspat, Pyrit und Calcit umfasst.

Weiterhin ist die Löschdecke mit Steppnähten zur Bildung von Kammern durchgesteppt, beziehungsweise gesteppt, ausgeführt. Durch eine solche Steppung sind in der Löschdecke zwischen den beiden äußeren Schichten aus Glasgewebe eine Vielzahl von Kammern gebildet, in denen das Bentonit jeweils bei der Herstellung bereits zwischen die äußeren Schichten eingebracht ist. Diese einzelnen Kammern gewährleisten eine gleichmäßige Verteilung des Bentonits über die Fläche der Löschdecke, ohne dass dieses bei der Handhabung der Löschdecke innerhalb der Löschdecke verrutscht. Beispielsweise werden Kammern mit einer Größe von ca. 6 mal 6 cm ausgebildet, die jeweils mit vorzugsweise 10 g Bentonit befüllt sind, so dass die mittlere Schicht eine Dicke von 3 bis 4 mm aufweist. Es versteht sich, dass randseitig die Löschdecke, beziehungsweise deren abgesteppten Kammern, mit einem Kantenband oder Gurtband abgenäht und verschlossen sind.

Prinzipiell könnte der Rand der Löschdecke auch zusätzlich verstärkt sein, um eine erhöhte Reißfestigkeit aufzuweisen. Ebenso kann am Rand der Löschdecke eine Beschwerung, beispielsweise durch das Einnähen von Bleigewichten, erfolgen, um das plane Aufliegen des Randes oder randseitigen Bereichs der Löschdecke auf einem Untergrund zu gewährleisten. Dieses Aufliegen kann die Gasdichtigkeit und damit die gewünschte Filterwirkung der Löschdecke erhöhen.

Zur Erhöhung der Stabilität der Löschdecke kann diese auch mit einem Edelstahlgewebe verstärkt sein, das vorzugsweise jeweils innenseitig zwischen den äußeren Glasgeweben und der mittleren Bentonitschicht angeordnet ist. Somit erhält die Löschdecke einen fünflagigen Aufbau, bzw. weist einen fünflagigen Aufbau auf. Dieser Aufbau macht die Löschdecke zwar robuster, aber auch schwerer und gegebenenfalls nicht so einfach handhabbar. Das Edelstahlgewebe kann in einer oder mehreren Lagen jeweils zwischen den äußeren Glasgeweben und der mittleren Bentonitschicht vorgesehen sein.

Gemäß einer Weiterbildung wird als Glasgewebe ein Material der Firma Planex Technik in Textil GmbH, Ludwigshafen, Deutschland, beziehungsweise der Firma Valmira Glass UK Ltd mit deren Bezeichnung TG-430-G-SH verwendet, das insbesondere die vorstehend genannte Norm für Brennverhalten erfüllt. Dabei handelt es sich um ein beschichtetes Glasgewebe, das UVstabil, reiß- und abriebfest, ölbeständig und knickunempfindlich ist.

Durch diese Ausgestaltung der Löschdecke ist sie mit einer ausreichenden Feuerfestigkeit ausgestattet, beziehungsweise sie kann den bei Bränden entstehenden hohen Temperaturen für einen ausreichenden Zeitraum ohne nennenswerte Beschädigungen widerstehen, um beispielsweise einen herkömmlichen Brand durch Abschneiden der Sauerstoffzufuhr zu löschen. Außerdem ist die Löschdecke durch ihre äußeren Gewebeschichten sowie das zwischen den Gewebeschichten angeordnete Bentonit auch in einem gewissen Maß gasdurchlässig, so dass insbesondere die beim Abbrennen einer Lithium-Ionen-Batterie entstehende Gasmenge durch die Löschdecke hindurch abgeführt werden kann. Dabei tritt aber durch das in der Löschdecke eingearbeitete Bentonit ein Filtereffekt auf, so dass insbesondere die beim Abbrennen entstehende Flusssäure durch das Bentonit herausgefiltert, beziehungsweise an diesem Bentonit adsorbiert, wird. Somit ist eine Gasvergiftung umstehender Personen bei einem gleichzeitigen Schutz vor offenen Flammen wirkungsvoll vermieden. Neben der Flusssäure, die auch als Fluorwasserstoffsäure (HF) bezeichnet wird, werden auch giftige Stäube, die beispielsweise schwermetallhaltig sind oder Graphit- bzw. Nanokohlenstoffverbindungen umfassen, und kanzerogene Elektrolytdämpfe gefiltert.

Im Weiteren ist durch das Ableiten des Gases durch die Löschdecke aufgrund deren Gasdurchlässigkeit vermieden, dass durch den bei einem Brand entstehenden Gasdruck unterhalb der Löschdecke dieselbe von dem abgedeckten brennenden Objekt entfernt, also quasi heruntergeworfen, oder bei einer fehlenden randseitigen Beschwerung von dem Untergrund abgehoben wird, insbesondere bei einer entstehenden Druckwelle.

Im Rahmen der Erfindung können die Glasgewebe, das dazwischen angeordnete Bentonit sowie ein Garn zum Vernähen der Löschdecke in an sich beliebiger Weise gewählt werden, bevorzugt jedoch wie im Folgenden beschrieben.

Weiterhin kann die Löschdecke in an sich beliebigen Formaten hergestellt werden. Beispielsweise kann sie in einer derartigen Größe konfektioniert sein, dass beispielsweise an einem Abstellplatz für ein Elektrofahrzeug mit mindestens einer Lithium-Ionen-Batterie eine ausreichend große Löschdecke, beispielsweise in einem Behälter, bereitgestellt ist, um im Falle eines Fahrzeugbrands das gesamte Fahrzeug damit abdecken zu können, so dass beispielsweise benachbart abgestellte Fahrzeuge nicht beschädigt werden und in einem Parkhaus das austretende Gas nicht zu Vergiftungserscheinungen von Benutzern des Parkhauses führt.

Insbesondere bei einem Elektrofahrzeug ist ein herkömmliches Löschen eines Brandes einer Lithium-Ionen-Batterie mit Löschwasser nicht möglich, da die Batterie ohne externen Sauerstoff durchbrennt und das Löschwasser lediglich zur Kühlung des Fahrzeugs insgesamt dient. Bisher erfolgt eine Brandbekämpfung meist dadurch, dass das gesamte brennende Fahrzeug in einen wassergefüllten Container verbracht wird. Das ist aber beispielsweise in einer Tiefgarage kaum praktikabel. Somit kann nur ein Übergreifen des Brandes auf die Umgebung vermieden werden. Mit der erfindungsgemäßen und entsprechend dimensionierten Löschdecke beziehungsweise in diesem Fall einer Brandschutzdecke werden die austretenden Gase gefiltert und Beeinträchtigungen der Umgebung reduziert. Der eigentliche Brand der Lithium-Ionen-Batterie wird nicht gelöscht, sondern von der Umgebung separiert. Hierzu wird die ausreichend große Löschdecke über ein brennendes Elektrofahrzeug geworfen oder übergestülpt.

In gleicher Weise kann die Löschdecke derart dimensioniert sein, dass beispielsweise ein handgehaltenes mobiles Kommunikationsgerät, ein Laptop, ein Fahrradakku oder dergleichen in die Löschdecke eingeschlagen werden kann, um einen ausreichenden Brandschutz, beziehungsweise Schutz vor austretendem Giftgas, zu bewirken.

Wird beispielsweise ein mobiles Gerät mit einer Lithium-Ionen-Batterie in einem Passagierraum eines Flugzeugs, eines Zugs oder eines Busses mitgeführt und kommt es zum Durchbrennen der Batterie so kann das Gerät insgesamt in eine entsprechend konfektionierte Löschdecke oder Brandschutzdecke, bevorzugt wie im Folgenden beschrieben, eingeschlagen oder eingehüllt werden. Die Batterie wird zwar weiter durchbrennen jedoch werden giftige Abgase durch die Brandschutzdecke gefiltert beziehungsweise an dem enthaltenen Bentonit adsorbiert und somit die Gefährdung der Umgebung reduziert.

Aufgrund des enthaltenen Absorbermaterials der Brandklasse A1 weist die Löschdecke eine derartige thermisch-mechanische Stabilität auf, dass sie auch einer extrem scharfen Flamme einer Seenotrettungsfackel, die beispielsweise auch unter dem Namen "Bengalo" bekannt ist, stand hält.

Durch den symmetrischen Aufbau der Löschdecke ohne eine Vorzugsrichtung oder Vorzugsseite ist die Benutzung auch in Stresssituationen relativ einfach und eine Fehlbenutzung nahezu ausgeschlossen.

Die Unteransprüche stellen vorteilhafte Ausgestaltungen der Erfindung dar.

Insbesondere zur Ausbildung der Steppnähte sowie zum Verbinden der beiden äußeren Lagen miteinander erfolgt das Vernähen mit einem Garn mit einem Stahlkern, der mit Baumwolle umhüllt ist. Ein solches Garn wird beispielsweise von der Firma Coats Thread Germany GmbH, Breunlingen, Deutschland, unter der Bezeichnung "Helios" vertrieben. Dabei handelt es sich um einen Faden mit einem Stahlkern mit acht bis zehn Drähten der Stahlklasse 1.4301 oder ASI 304, die mit flammhemmender Baumwolle umhüllt sind. Die Baumwolle karbonisiert zwar bei höheren Temperaturen, der Stahlkern gewährleistet aber auch bei den auftretenden höheren Temperaturen eine ausreichende Festigkeit, um die Betriebssicherheit der Löschdecke zu gewährleisten.

Schließlich ist für die mittlere Bentonitschicht vorgeschlagen, dass das Bentonit eine Korngröße von 0,5 bis 2 mm aufweist. Beispielsweise handelt es sich um Montonit N Naturbentonit Feingranulat der Firma Herbst GmbH, Telgte, Deutschland, insbesondere mit einer mittleren Körnung von 0,5 - 2 mm, das 0,3% Kaliumoxid und 1,2% Magnesiumoxid enthält. Dieses Material ist ausreichend rieselfähig, um in einer gewünschten Menge in die abgesteppten Kammern eingefüllt werden zu können. Außerdem bietet dieses Bentonit einen ausreichenden Kompromiss hinsichtlich Gewicht, Steifheit, Feuerbeständigkeit und Gasdichtheit beziehungsweise Filterwirkung.

Zur Handhabung der Löschdecke ist vorgeschlagen, dass diese beispielsweise randseitig mit Handhabungseinrichtungen ausgestattet ist. Die Handhabungseinrichtungen können beispielsweise als schlaufenförmige Handgriffe aus Gurt- oder Kantenband ausgebildet sein, die zum Beispiel am Rand angenäht sind, und/oder als Bänder, Seile oder dergleichen ausgeführt sein, um die Löschdecke aus einem Vorratsbehälter schnell herausziehen und relativ einfach handhaben zu können.

Weiterhin ist vorgeschlagen, dass die Löschdecke insbesondere randseitig mit lösbaren Befestigungsmitteln, insbesondere Klettverschlüssen, ausgestattet ist. Mit diesen lösbaren Befestigungsmitteln kann die Löschdecke bei geeigneter Anordnung derselben am Rand zu einer Tasche zusammengefaltet und diese dann verschlossen werden. Bei geeigneter Dimensionierung der Löschdecke kann dann beispielsweise ein Laptop, Smartphone, Fahrradakku oder dergleichen in die zusammengefaltete Tasche eingelegt werden.

Selbstverständlich ist es auch möglich, die Tasche durch einen Überschlag zu verschließen.

Besonders in Zügen, Flugzeugen oder sonstigen Transportmitteln führen viele Passagiere ein elektronisches Gerät mit einer Lithium-Ionen-Batterie mit sich. Daher ist es ein rein statistisches Ereignis, dass eine solche Lithium-Ionen-Batterie durchbrennt. Als Rettungsmittel kann dann die im Fahrzeug mitgeführte Löschdecke, beziehungsweise eine bereits daraus zusammengefaltete Tasche, dienen. Beispielsweise wird in einem Flugzeug ein sich erwärmendes Laptop in eine solche Tasche eingelegt und diese mit einem lösbaren Befestigungsmittel oder einem Überschlag verschlossen werden, wobei das Erwärmen eines vorgenannten elektronischen Gerätes ab einer bestimmten Temperatur üblicherweise auf ein Durchbrennen einer Lithium-Ionen-Batterie hinweist bzw. die Vorstufe zum Durchbrennen einer Lithium-Ionen-Batterie ist. Die Tasche bietet dann nicht nur Schutz vor den entstehenden Flammen, sondern filtert auch die dabei entstehenden giftigen Gase heraus, so dass eine unmittelbare Gefährdung, beispielsweise von Personen in einem Flugzeug, die ja nicht flüchten können, erheblich reduziert ist.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert.

Es zeigt:
- Fig. 1: eine Darstellungen einer Löschdecke mit randseitigen Befestigungsmitteln und
- Fig. 2: eine Schnittdarstellung der Löschdecke.

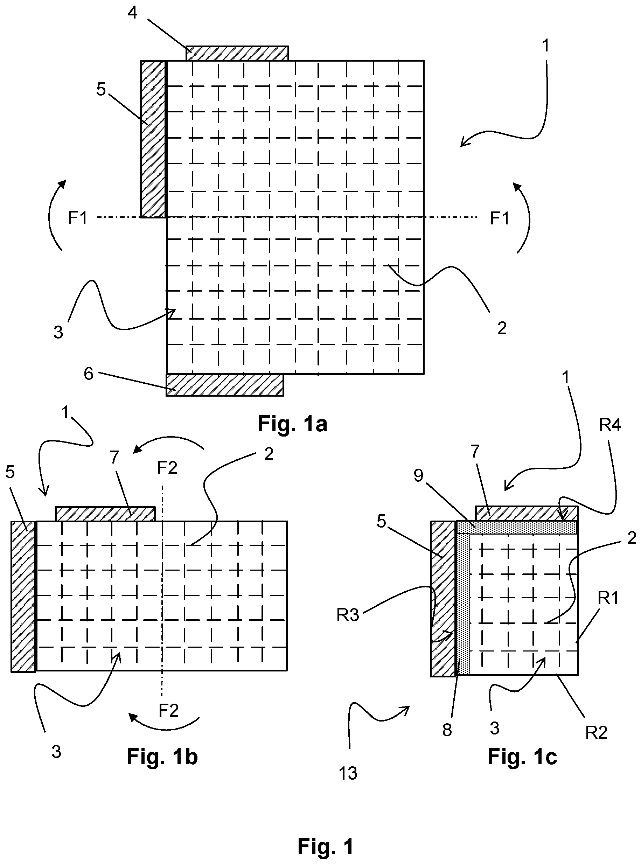

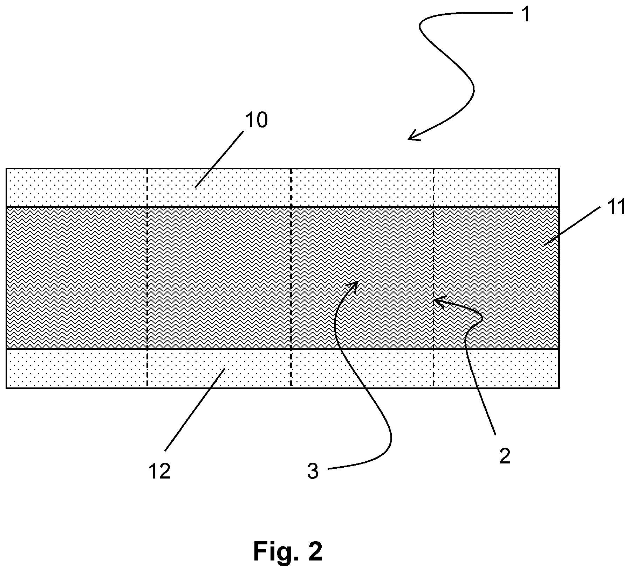

In den rein schematischen und nicht maßstäblichen Fig. 1 und 2 sind mit den gleichen Bezugszeichen jeweils die gleichen Komponenten bezeichnet.

In Fig. 2 ist eine Löschdecke 1 im Querschnitt dargestellt. Die Löschdecke 1, die auch als Brandschutzdecke bezeichnet werden kann, weist einen dreilagigen Aufbau, nämlich die Lagen 10, 11, 12, auf, wobei die beiden äußeren Lagen 10, 12, beziehungsweise die erste Lage 10 und die dritte Lage 12 oder Schicht, beziehungsweise im Querschnitt gesehen die untere Lage 10 und die obere Lage 12 jeweils durch ein Glasgewebe gebildet sind, wie durch eine Punktierung angedeutet ist. Zwischen diesen beiden Schichten oder äußeren Lagen 10, 12 ist eine zweite Lage 11 aus einem Füllmaterial aus Bentonit angeordnet, beispielsweise mit einer Korngröße von 0,5 bis 2 mm, wie durch Wellenlinien angedeutet ist. Die Löschdecke 1 ist mit gestrichelt dargestellten Steppnähten 2 in einzelne Kammern 3 unterteilt, wobei jede Kammer 3 eine Größe von beispielsweise 6 mal 6 cm aufweist. In jeder Kammer 3 sind zum Beispiel 10 g Bentonit angeordnet. Es versteht sich, dass die Löschdecke 1 randseitig beispielsweise mit einem Gurtband oder Kantenband verschlossen und abgenäht ist. Als Garn für die Steppnähte 2 wird vorzugsweise ein Garn mit einem baumwollumhüllten Stahlkern verwendet.

In Fig. 1 ist die Löschdecke 1 in verschiedenen teilweise zusammengefalteten Zuständen in Draufsicht abgebildet.

Um aus der Löschdecke 1 mit den mittels den Steppnähten 2 gebildeten Kammern 3 eine Tasche 13 zu falten, sind am Rand Befestigungsmittel angeordnet. Diese Befestigungsmittel sind beispielsweise am Rand der Löschdecke 1 angenäht und vorliegend als erster Klettverschluss 4, zweiter Klettverschluss 5 und dritter Klettverschluss 6, bzw. entsprechende die Klettverschlüsse 4, 5, 6 bildende Klett- und/oder Flauschbänder, ausgebildet.

Zum Zusammenfalten der Löschdecke 1 zu einer Tasche wird diese wie aus Fig. 1a ersichtlich zunächst entlang der Faltlinie F1-F1 in Richtung der beiden gekrümmten Pfeile derart zusammengefaltet, dass der erste Klettverschluss 4 und der dritte Klettverschluss 6 aufeinander liegen, wobei die Klettverschlüsse 4, 6 zur lösbaren Verschlussbildung mit ihren Kletten und Schlaufen jeweils entsprechend zueinander angeordnet und ausgerichtet sind.

In Fig. 1b ist die einmal zusammengefaltete Löschdecke 1 dargestellt. Dabei ist hier links nach wie vor der zweite Klettverschluss 5 und ein auf der Rückseite des dritten Klettverschlusses 6 vorhandener vierter Klettverschluss 7 freiliegend erkennbar. Die Löschdecke 1 wird nunmehr entlang der zweiten Faltlinie F2-F2 in Richtung der beiden gekrümmten Pfeile derart gefaltet, dass die ursprüngliche Grundfläche der Löschdecke 1 auf ein Viertel reduziert ist. Dabei kommen jedoch mehrere Lagen der Löschdecke 1 übereinander zu liegen, wobei durch das zweimalige Zusammenfalten der Löschdecke 1 die rechten und unteren Ränder R1 und R2 teilweise durch das Material der Löschdecke 1 verschlossen sind, wie aus Fig. 1c ersichtlich ist. Hierbei liegen im Bereich der unteren Ränder R2 mehrere nicht miteinander verbundene Lagen der Löschdecke 1 derart aufeinander, dass ein Gegenstand zwischen den Lagen aufgenommen werden kann, wobei der Gegenstand auf der einen Seiten von drei Lagen und auf der gegenüberliegenden Seiten von einer Lage der Löschdecke 2 überdeckt ist.

Damit die Tasche 13 entsteht, wird am linken Rand R3 der zweite Klettverschluss 5 mit einem fünften Klettverschluss 8 und am oberen Rand R4 der vierte Klettverschluss 7 mit einem sechsten Klettverschluss 9 verbunden. Dabei sind die fünften und sechsten Klettverschlüsse 8, 9 in der Fig. 1a auf der Unterseite der dort vollständig ausgebreiteten Löschdecke 1 angeordnet und stehen nicht randseitig über.

Zum Verschließen der aus der Löschdecke 1 zusammengefalteten Tasche 13 am oberen Rand R4 wird der erste Klettverschluss 4 mit dem auf der Rückseite des vierten Klettverschlusses 7 vorhandener dritten Klettverschluss 6 verbunden.

Vor dem Verschließen der aus der Löschdecke 1 zusammengefalteten Tasche 13 kann beispielsweise ein Laptop mit einer durchbrennenden Lithium-Ionen-Batterie eingelegt werden. Somit ist ein Übergreifen von Flammen wirkungsvoll vermieden und das Bentonit in der Löschdecke 1 filtert zumindest in ausreichendem Maß die dabei entstehenden giftigen Gase, Stäube und Dämpfe.

Es versteht sich, dass die Löschdecke 1 beziehungsweise die daraus zusammengefaltete Tasche 13 beispielsweise mit Firmenlogos, Werbung oder dergleichen versehen sein kann. Im Weiteren kann die Löschdecke 1 zur Vereinfachung ihrer Handhabung auch mit Handhabungseinrichtungen, wie randseitigen Schlaufen oder Bändern oder Griffstücken oder dergleichen, ausgestattet sein,

### Bezugszeichenliste

- 1: Löschdecke
- 2: Steppnaht
- 3: Kammer
- 4: erster Klettverschluss
- 5: zweiter Klettverschluss
- 6: dritter Klettverschluss
- 7: vierter Klettverschluss
- 8: fünfter Klettverschluss
- 9: sechster Klettverschluss
- 10: erste Lage
- 11: zweite Lage
- 12: dritte Lage
- 13: Tasche

- F1: erste Faltlinie
- F2: zweite Faltlinie
- R1: rechter Rand
- R2: unterer Rand
- R3: linker Rand
- R4: oberer Rand

## Patentansprüche

1. Löschdecke (1) mit einem mehrlagigen Aufbau, **wobei** die Löschdecke (1) einen dreilagigen Aufbau (10, 11, 12) aufweist mit einer ersten und dritten äußeren Lage (10, 12) aus einem Glasgewebe und einer dazwischen angeordneten zweiten Lage (11), die Bentonit in Form eines Feingranulats umfasst, **dadurch gekennzeichnet, dass** die Löschdecke (1) mit Steppnähten (2) zur Bildung von Kammern (3) durchgesteppt ist, in denen das Bentonit jeweils bei der Herstellung bereits zwischen die äußeren Schichten eingebracht ist.

2. Löschdecke (1) nach Anspruch 1, **dadurch gekennzeichnet,** die Steppnähte (2) aus einem Garn mit Stahlkern bestehen, der mit Baumwolle umhüllt ist.

3. Löschdecke (1) nach einem der Ansprüche 1 oder 2, **dadurch gekennzeichnet, dass** das Bentonit eine Korngröße von 0,5 bis 2 mm aufweist.

4. Löschdecke (1) nach einem der Ansprüche 1 bis 3, **dadurch gekennzeichnet, dass** die Löschdecke (1) mit Handhabungseinrichtungen ausgestattet ist, insbesondere randseitigen Schlaufen und/oder Bändern.

5. Löschdecke (1) nach einem der Ansprüche 1 bis 4, **dadurch gekennzeichnet, dass** aus der Löschdecke (1) mit lösbaren Befestigungsmitteln einer Tasche (13) faltbar ist.

6. Löschdecke (1) nach Anspruch 5, **dadurch gekennzeichnet, dass** die lösbaren Befestigungsmittel als randseitig an der Löschdecke (1) befestigte Klettverschlüsse (4, 5, 6, 7, 8, 9) ausgebildet sind.

## Claims

1. Fire blanket (1) having a multi-layer structure, the fire blanket (1) having a three-layer structure (10, 11, 12) having a first and third outer layer (10, 12) made of a glass fabric and a second layer (11) which is arranged between said outer layers and comprises bentonite in the form of a fine granulate, **characterized in that** the fire blanket (1) is stitched through with quilting seams (2) to form chambers (3) in which the bentonite is already introduced between the outer layers during production in each case.

2. Fire blanket (1) according to claim 1, **characterized in that** the quilting seams (2) consist of a yarn having a steel core which is surrounded with cotton.

3. Fire blanket (1) according to either claim 1 or claim 2, **characterized in that** the bentonite has a grain size of from 0.5 to 2 mm.

4. Fire blanket (1) according to any of claims 1 to 3, **characterized in that** the fire blanket (1) is equipped with handling apparatuses, in particular edge-side loops and/or belts.

5. Fire blanket (1) according to any of claims 1 to 4, **characterized in that** a pocket (13) can be folded out of the fire blanket (1) using releasable fastening means.

6. Fire blanket (1) according to claim 5, **characterized in that** the releasable fastening means are designed as hook-and-loop fasteners (4, 5, 6, 7, 8, 9) which are fastened at the edge of the fire blanket (1).

## Revendications

1. Couverture anti-feu (1) comportant une structure à plusieurs couches, **dans laquelle** la couverture anti-feu (1) présente une structure à trois couches (10, 11, 12) comportant une première et une troisième couche extérieure (10, 12) en un tissu de verre et une deuxième couche (11) disposée entre celles-ci et qui comprend de la bentonite sous forme de granulés fins, **caractérisée en ce que** la couverture anti-feu (1) est piquée de surpiqûres (2) pour former des chambres (3) dans lesquelles la bentonite est déjà introduite entre les couches extérieures, respectivement lors de la fabrication.

2. Couverture anti-feu (1) selon la revendication 1, **caractérisée en ce que** les surpiqûres (2) sont constituées d'un fil à noyau en acier enveloppé de coton.

3. Couverture anti-feu (1) selon l'une des revendications 1 ou 2, **caractérisée en ce que** la bentonite présente une grosseur de grains de 0,5 à 2 mm.

4. Couverture anti-feu (1) selon l'une des revendications 1 à 3, **caractérisée en ce que** la couverture anti-feu (1) est équipée de dispositifs de manipulation, en particulier de sangles et/ou de bandes sur les bords.

5. Couverture anti-feu (1) selon l'une des revendications 1 à 4, **caractérisée en ce qu'**un sac (13) peut être plié à partir de la couverture anti-feu (1) à l'aide de moyens de fixation amovibles.

6. Couverture anti-feu (1) selon la revendication 5, **caractérisée en ce que** les moyens de fixation amovibles sont réalisés en tant que fermetures auto-agrippantes (4, 5, 6, 7, 8, 9) fixées sur les bords de la couverture anti-feu (1).
